# EUROPEAN PATENT APPLICATION

(11) **EP 1 413 951 A2**
(43) Date of publication of application: **28.04.2004**
(21) Application number: 03020526.4
(22) Date of filing: 16.09.2003
(51) Int. Cl.: G06F 7/58

(54) **Method for generating random number and random number generator**

(30) Priority: 27.09.2002 JP 2002282842
(71) Applicant: Niigata University, Niigata City, Niigata Pref., (JP)
(72) Inventor: Yoshiaki, Saito, Niigata-City Niigata Pref (JP)
(74) Representative: von Hellfeld, Axel, Dr. Dipl.-Phys.

(57) **Abstract**

A given driving voltage is applied to an input of a bistable multivibrator circuit to be driven. In this case, one transistor in the bistable multivibrator circuit is switched on and off randomly on noise in the circuit. When numerals "0" and "1" are allotted to the conduction state (on-state) and the non-conduction state (off-state) of the transistor, a given binary random number is generated.

## Description

### BACKGROUND OF THE INVENTION

### Field of the Invention

This invention relates to a method for generating random number and a random number generator which are usable in information industry field such as cryptograph, particularly in quantum computer field.

### Description of the related art

Random number which is perfectly in disorder and has uniform frequency of appearance is widely available in numerical simulation for social phenomenon, physical phenomenon and the like. The random number also plays an important role in cryptograph, and get a lot of attention in information security field. At present, various generating methods of random number are researched and developed, but can almost generate only pseudorandom number on software algorithm.

As of now, the algorithmic generating method of random number is widely available on a certain level of reliability and high speed random number generation. Generally, however, since the computer can generate only definite range of information, the random number generated by the computer has a given periodicity. Therefore, in numerical simulation, precise solution can not be obtained and in information security, sufficient security can not be realized.
In this point of view, random number with more perfect disorder is desired.

Recently, with the development of processing speed and reliability in hardware, a physical generating method of random number has been developed. For example, it is known that random number which is generated on physical phenomenon such as thermoelectron noise or radioactive decay has low predictability to be ideal. However, the physical generating method requires large scaled devices for generating the random number.

### SUMMERY OF THE INVENTION

It is an object of the present invention to provide, with simple and not expensive devices, a new method for generating random number with more perfectly disorder and a random number generator which is utilized in the generating method of random number.

For achieving the above object, this invention relates to a method for generating random number, comprising the steps of:
preparing a bistable multivibrator circuit comprised of a first transistor and a second transistor,
applying a driving voltage to the bistable multivibrator circuit to switch on and off one of the first transistor and the second transistor randomly,
allotting numerals "0" and "1" to on-state and off-state of the one of the first transistor and the second transistor, thereby to generate a binary random number.

This invention also relates to a random number generator comprising a bistable multivibrator circuit.

A bistable multivibrator circuit is comprised of two transistors which are coupled in positive feedback, irrespective of the use condition of the circuit such as each part circuit or an integrated circuit. In the bistable multivibrator circuit, when a driving voltage is applied to the circuit, one of the transistors is render conduction in electric current and the other is render shut in electric current, immediately. When the transistors are made of the same transistor in characteristic value and the other components are made of symmetric components in characteristic value, therefore, the bistable multivibrator circuit becomes ideal, so that when the bistable multivibrator circuit is switched on by supplying the driving voltage, it becomes difficult to predict which one of the transistors is rendered conduction in electric current. In this case, the switching selectivity of transistor depends on noise in the bistable multivibrator circuit.

In this point of view, if one of the transistors is detected in electric conduction, and for example, numeral "0" is allotted to the non-conduction state of the transistor and numeral "1" is allotted to the conduction state of the transistor, a binary random number can be generated because the transistor is switched randomly on the noise in the bistable multivibrator circuit.

The electric conduction of the transistor can be detected easily by measuring the collector voltage thereof.

If the ideal bistable multivibrator circuit can not be constructed, the selected one transistor can not be switched on/off randomly on the noise in the bistable multivibrator circuit, and thus, is likely to be switched on or off stochastically. Therefore, the above-mentioned binary random number can not be generated.

In this case, it is desired that the characteristic value of a component in the bistable multivibrator circuit are so adjusted as to render the electric conduction of the selected transistor random on the noise in the bistable multivibrator circuit, particularly within a predetermined period of time. Therefore, the occurrence probability of "0" or "1" can be rendered 0.5, and thus, the binary random number can be generated.

### BRIEF DESCRIPTION OF THE DRAWINGS

For better understanding of the present invention, reference is made to the attached drawings, wherein
Fig. 1 is a circuit diagram of a bistable multivibrator circuit included in a random number generator according to the present invention,
Fig. 2 is a circuit diagram of an electric power supply controlling circuit for generating a driving voltage to be applied to the bistable multivibrator circuit,
Fig. 3 is a circuit diagram of a buffer circuit for measuring and outputting the collector voltage of one transistor in the bistable multivibrator circuit,
Fig. 4 is a binary frequency distribution of a random number generated by a random number generator and random number generating method according to the present invention, and
Fig. 5 is a binary frequency distribution of another random number generated by the random number generator and the random number generating method of the present invention.

### DESCRIPTION OF THE PREFERRED EMBODIMENTS

This invention will be described in detail with reference to the accompanying drawings.

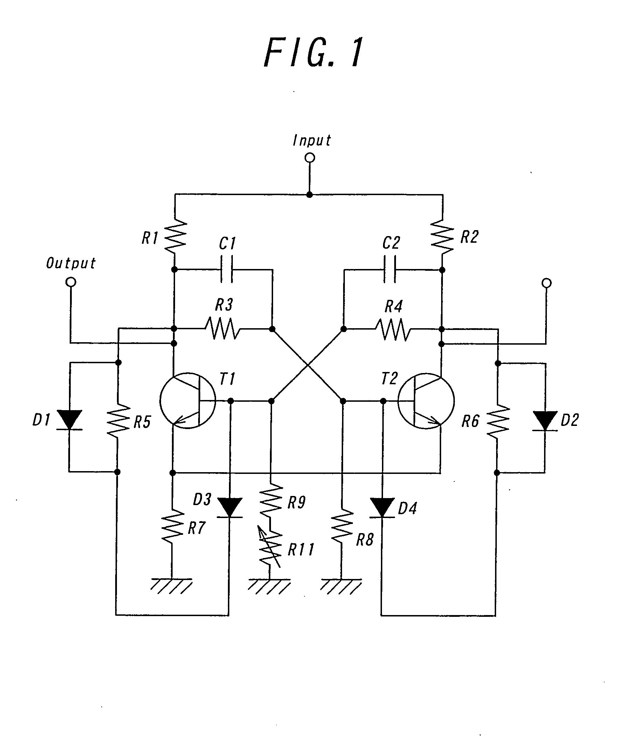

Fig. 1 is a circuit diagram of a bistable multivibrator circuit included in a random number generator according to the present invention. The bistable multivibrator circuit illustrated in Fig. 1 is constructed of, as fundamental circuit parts, transistors T1; T1, collector resistances R1; R2, feedback resistances R3; R4, and biasing resistances R7, R8, R9; R11, and as supplemental circuit parts, condensers C1; C2, resistances R5; R6, and diodes D1-D4 for wave-shaping.

In order to realize the bistable multivibrator circuit, the transistors T1 and T2 are made of the same transistor in characteristic value. The resistance values of the collector resistances R1 and R2 are set equal to each other, and the resistance values of the feedback resistances R3 and R4 are set equal to each other. Also, the capacities of the condensers C1 and C2 are set equal to each other. Herein, it is not always required to set the resistance values of the resistances R5 and R6 and the characteristic values of the diodes D1-D4 equal to one another. Generally, however, it is desired that the characteristic values of the supplemental circuit parts such as the resistances and the diodes are set equal to one another.

When a given driving voltage is applied to the bistable multivibrator circuit from the input, one of the transistors T1 and T2 is rendered conduction in electric current and the other is rendered shut in electric current. In this case, if the characteristic values of the transistors T1; T2, the resistance values of the collector resistances R1; R2, the resistance values of the feedback resistances R3; R4, the capacities of the condensers C1; C2, and the resistance values of the biasing resistance R8; R9+R11 are set equal to each other, the conduction states of the transistors T1 and T2 can not be predicted, and thus, depend on noise in the bistable multivibrator circuit.

For example, numeral "0" is allotted to the conduction state of the transistor T1 through switching operation (switch on), and numeral "1" is allotted to the non-conduction state of the transistor T1 through switching operation (switch off). Since the conduction state or the non-conduction state of the transistor T1 depends on the noise in the bistable multivibrator circuit, the numerals "0" and "1" can be generated randomly, so that a given binary random number can be generated.

The conduction state and the non-conduction state of the transistor T1 can be easily detected by measuring the collector voltage of the transistor T1 at the output.

Generally, however, it is difficult to realize the above-mentioned ideal bistable multivibrator circuit only if the characteristic values of the transistors T1 and T2 are set equal to each other, so that the transistors T1 and T2 are likely to be conduction state or non-conduction state stochastically. Therefore, the probability in conduction state or non-conduction state of the transistor T1 is larger than the probability in non-conduction state or conduction state of the transistor T1 stochastically, so that the occurrence probability of the numeral "0" or "1" is larger than the occurrence probability of the numeral "1" or "0". As a result, a binary random number can not be generated.

In this case, the characteristic values of the circuit parts in the bistable multivibrator circuit are adjusted within a predetermined period of time to render the occurrence probability of the numeral "0" or "1" equal to each other (occurrence probability=0.5). Therefore, since the conduction state and the non-conduction state of the transistor T1 can be set randomly on the noise in the bistable multivibrator circuit, the occurrence probabilities of the numerals "0" and "1" can be set to 0.5, so that a given binary random number can be generated.

In this embodiment, the resistance value of the biasing resistance R11 as a variable resistance is adjusted to realize the equal occurrence probability of 0.5 relating to the numerals "0" and "1". The biasing resistance R11 may be coupled in series to the resistance R8 on balance condition.

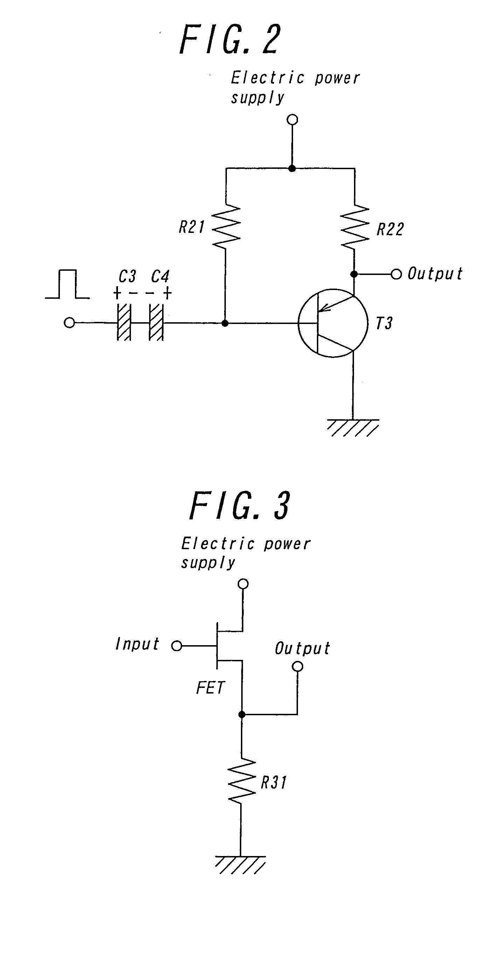

Fig. 2 is a circuit diagram of an electric power supply controlling circuit for generating a driving voltage to be applied to the bistable multivibrator circuit illustrated in Fig. 1. In the electric power supply controlling circuit illustrated in Fig. 2, the output is coupled to the input of the bistable multivibrator circuit illustrated in Fig. 1.

In the electric power supply controlling circuit in Fig. 2, a given biasing current is introduced into the circuit, and a given rectangular wave is also introduced into the circuit via the condensers C3 and C4. Then, the transistor T3 is switched to generate and output a driving voltage at the collector for the bistable multivibrator circuit. Instead of the condensers C3 and C4, a single nonpolar condenser may be employed.

Fig. 3 is a circuit diagram of a buffer circuit for measuring and outputting the collector voltage of the transistor T1 in the bistable multivibrator circuit illustrated in Fig. 1. In the buffer circuit illustrated in Fig. 3, the input is coupled to the output at the collector of the transistor T1 in the bistable multivibrator circuit illustrated in Fig. 1. A given collector voltage measured at the output of the buffer circuit is supplied for calculation.

In the use of the buffer circuit illustrated in Fig. 3, the collector voltage of the transistor T1 can be easily measured without the influence on the bistable multivibrator circuit illustrated in Fig. 2. Therefore, the binary random number can be generated easily and stably.

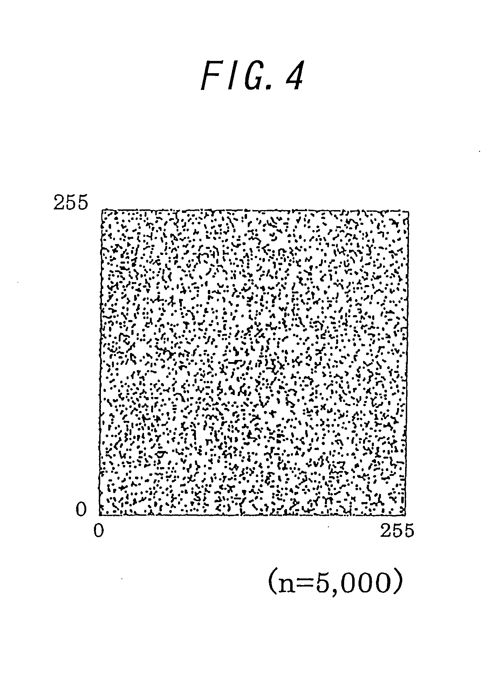

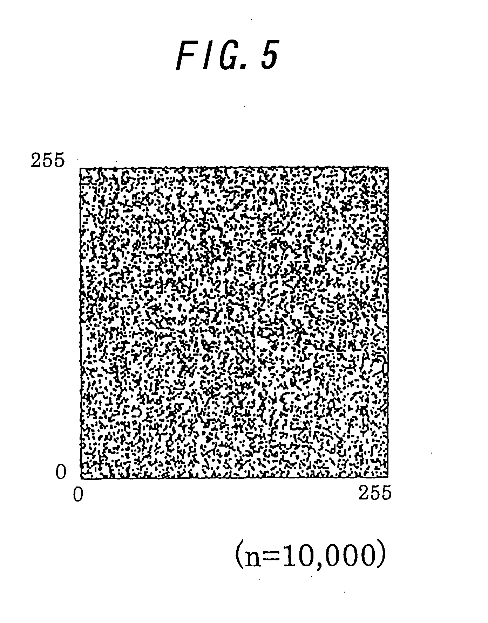

Figs. 4 and 5 are binary frequency distributions of random numbers generated by using the random number generator comprised of the circuit components illustrated in Figs. 1-3. Fig. 4 shows 5000 random number pieces and Fig. 5 shows 10000 random number pieces. In Figs. 4 and 5, no checkered pattern appears, and only dot-like pieces appears, which shows the generation of a binary random number.

Although the present invention was described in detail with reference to the above examples, this invention is not limited to the above disclosure and every kind of variation and modification may be made without departing from the scope of the present invention.

In the circuit diagram illustrated in Fig. 1, for example, if condensers C11 (0.001 µF), C12 (0.1 µF) and C13 (1 µF) are coupled in parallel to the line between the input and the earth, the operation of the bistable multivibrator circuit can be stabilized. In the above embodiment, although the transistor T1 is employed and driven in on/off switch, the transistor T2 may be employed and driven. Also, numeral "0" may be allotted to the non-conduction state of the transistor T1 and numeral "1" may be allotted to the conduction state of the transistor T1.

Moreover, in the above-mentioned embodiment, although the biasing variable resistance R11 for balancing the transistors T1 and T2 is coupled in series to the resistance R9, it may be coupled in parallel. In addition, instead of the resistance R11, another variable resistance may be coupled in series or in parallel to a resistance of the bistable multivibrator circuit.

As mentioned above, according to the present invention, with simple and not expensive devices, a new method for generating random number with more perfectly disorder and a random number generator which is utilized in the generating method of random number can be provided.

## Claims

1. A method for generating random number, comprising the steps of:
preparing a bistable multivibrator circuit comprised of a first transistor and a second transistor,
applying a driving voltage to said bistable multivibrator circuit to switch on and off one of said first transistor and said second transistor randomly,
allotting numerals "0" and "1" to on-state and off-state of said one of said first transistor and said second transistor, thereby to generate a binary random number.

2. The generating method as defined in claim 1, wherein said on-state and said off-state of said one of said first transistor and said second transistor is detected by measuring collector voltage thereof.

3. The generating method as defined in claim 1 or 2, wherein occurrence probability of "0" and "1" is controlled by adjusting characteristic value of a circuit component in said bistable multivibrator circuit.

4. The generating method as defined in claim 3, wherein said occurrence value is set to 0.5.

5. The generating method as defined in claim 3 or 4, wherein said circuit component is a biasing variable resistance.

6. A random number generator comprising a bistable multivibrator circuit.

7. The random number generator as defined in claim 6, wherein said bistable multivibrator circuit includes a biasing variable resistance.

8. The random number generator as defined in claim 6 or 7, further comprising an electric power supply controlling circuit which is coupled to said bistable multivibrator circuit and generates a driving voltage for said bistable multivibrator circuit.

9. The random number generator as defined in any one of claims 6-8, further comprising a buffer circuit which is coupled to said one of said first transistor and said second transistor and detect collector voltage thereof.
